# EUROPÄISCHE PATENTSCHRIFT

(11) **EP 3 280 894 B1**
(45) Veröffentlichungstag und Bekanntmachung des Hinweises auf die Patenterteilung: **29.05.2019**
(21) Anmeldenummer: 16721675.3
(22) Anmeldetag: 20.04.2016
(51) Int. Cl.: F02C 7/228, F02C 9/28, F01D 17/04

(54) **BETRIEB EINER GASTURBINE MIT EINER INTERPOLIERTEN FAHRLINIENABWEICHUNG**
OPERATION OF A GAS TURBINE WITH AN INTERPOLATED OPERATING LINE DEVIATION
OPÉRATION D'UNE TURBINE À GAZ À ÉCART INTERPOLÉ DE LIGNE D'OPÉPARTION

(30) Priorität: 03.06.2015 EP 15170417
(43) Veröffentlichungstag der Anmeldung: 14.02.2018
(73) Patentinhaber: Siemens Aktiengesellschaft, 80333 München (DE)
(72) Erfinder: HAUSMANN, Kai, 45470 Mülheim (DE); SEILER, Carsten, 45665 Recklinghausen (DE); WALL, Dirk, 45473 Mülheim (DE)
(86) Internationale Anmeldenummer: PCT/EP2016/058703
(87) Internationale Veröffentlichungsnummer: WO 2016/192890

(56) Entgegenhaltungen:
- DE-A1-102006 008 483
- US-A1- 2013 167 549
- US-A1- 2013 227 954

## Beschreibung

Die vorliegende Erfindung betrifft ein Betriebsverfahren für eine Gasturbine bei Teillastbetrieb. Typischerweise folgen Gasturbinen bei einem solchen Teillastbetrieb einer vorprogrammierten Regelung mit geeigneten Regelparametern, die etwa auch als Fahrlinie über einen größeren Betriebsbereich vorgesehen sein können. So können etwa bei einem sog. Leistungsbetrieb, also einem Betrieb, bei welchem die abgegebene Leistung der Gasturbine als Regelparameter vorgesehen ist, ein Satz an Fahrlinien in der Regelung vorbestimmt sein, bei dem ausgewählten Leistungswerten der Gasturbine vorbestimmte Temperaturwerte zugordnet sind. Dieser Temperaturwert entspricht einem für die Bestimmung der Leistung der Gasturbine relevanten Temperaturwert, wobei dieser etwa die Turbineneintrittstemperatur oder auch die Turbinenaustrittstemperatur sein kann. Die betreffenden Fahrlinien dienen während des Leistungsbetriebs als Führungsgrößen, mittels welcher ein gewünschter Leistungswert eingestellt werden kann. In anderen Worten dienen diese Fahrlinien als ein Satz an Regelsollwerten, auf welche die Gasturbinenregelung den Leistungswert einstellt.

Zusätzlich zu derartigen Temperaturwerten können solche Fahrlinien aber etwa auch noch Betriebsparameter hinsichtlich der Stellung eines variablen Verdichterleitgitters (Verdichterleitschaufeln) umfassen, wie auch weitere Betriebsparameter, etwa eine Menge an in die Gasturbine eingedüstem Wasser oder auch die Verteilung der Brennstoffmenge an einzelne Brenner oder Brennerstufen in der Gasturbine, um die Leistung der Gasturbine geeignet anzupassen.

Die Fahrlinien werden in Gasturbinen typischerweise für unterschiedlichste Betriebsverfahren einzeln festgelegt und in der Regelung der Gasturbine hinterlegt. Die Fahrlinien werden hierbei derart bestimmt, dass bei jedem Punkt der Fahrlinie ein stabiler Betrieb der Gasturbine erfolgen kann. Insbesondere die konkrete Verteilung des Brennstoffs an verschiedene Brenner der Gasturbine ist in den einzelnen Fahrlinien als Betriebsparameter hinterlegt und ändert sich typischerweise innerhalb einer Fahrlinie nicht oder nur kaum. Soll nun der Betrieb einer Gasturbine entlang einer vorbestimmten ersten Fahrlinie dahingehend geändert werden, dass dieser gemäß einer zweiten davon abweichenden Fahrlinie erfolgt, ist ein Wechseln zwischen diesen Fahrlinien erforderlich. Liegen die beiden betreffenden Fahrlinien verhältnismäßig eng aneinander, kann möglicherweise ein direktes Umschalten zwischen erster Fahrlinie und zweiter Fahrlinie vorgenommen werden, ohne dass mit Instabilitäten bei Betrieb der Gasturbine zu rechnen ist. Liegen die beiden Fahrlinien jedoch verhältnismäßig weit auseinander, kann aufgrund dieses Wechsels die Gasturbine in einen instabilen Betriebsbereich überführt werden, welcher im schlimmsten Fall sogar zu einer Notabschaltung der Gasturbine führt.

Zwar wird im Stand der Technik, etwa wie der EP 2 071 157 A1, der Wechsel zwischen solchen Fahrlinien beschrieben, jedoch kann gemäß diesem Stand der Technik die Problematik der instabilen Betriebsweisen beim Wechsel zwischen einzelnen Fahrlinien nicht ausreichend Rechnung getragen werden. So lehrt etwa die EP 2 071 157 A1 einen beliebigen Wechsel zwischen einzelnen Fahrlinien, ohne jedoch anzugeben, dass aufgrund der möglicherweise für die neue Fahrlinie geltenden neuen Betriebsparametern ein instabiler Betrieb die Folge sein kann.

Insbesondere aufgrund der zwischen zwei Fahrlinien unterschiedlichen Verteilung von Brennstoff an die einzelnen Brenner bzw. Brennerstufen der Gasturbine können bei Wechsel zwischen zwei Fahrlinien verhältnismäßig abrupte Änderungen im Verbrennungsraum erfolgen, die den Gasturbinenbetrieb wenigstens zeitweilig instabil werden lassen. Zwar wird bei Betrieb entlang einer Fahrlinie typischerweise ein Betriebspunkt durch geeignetes Regeln der Gasturbine weitgehend stabil gehalten, jedoch ist diese Regelung meist nur für den Ausgleich kleinerer Abweichungen ausgelegt. Geringe Abweichungen entlang einer Fahrlinie verlaufen insofern meist störungsfrei. Abweichungen jedoch, welche beim Betrieb über mehrere Fahrlinien hinweg entstehen, kann die Gasturbinenregelung mitunter nicht störungsfrei ausregeln.

Einen weiteren Ansatz hierzu lehrt die DE102006008483A1, gemäß welcher Ventilpositions-Befehlswerte von Brennstoffströmungsmengen-Steuerventilen basierend auf dem Brennstoffgasverhältnis (wie z.B. einem Pilotverhältnis, einem Zylinderverhältnis und einem Hauptverhältnis) einer Gasturbine bestimmt werden sollen. Hierbei kann etwa auch der Öffnungsgrad von Einlassleitschaufeln gezielt durch lineare Interpolation berechnet werden, so dass eine Turbineneinlasstemperatur von 1500°C resultiert. Zur Interpolation stehen hierbei Tabellenwerte zur Verfügung, welche punktuell einige Öffnungsgrade mit der Leistung der Gasturbine und der Einlasslufttemperatur in Beziehung setzen. Nachteilig an dem Ansatz ist jedoch, dass kein Fahrlinien abhängiger Betrieb der Gasturbine ermöglicht ist.

Insofern stellt sich das technische Erfordernis, ein geeignetes Betriebsverfahren für eine Gasturbine bei Teillastbetrieb anzugeben, welche die aus dem Stand der Technik bekannten Nachteile vermeiden kann. Insbesondere ist ein Betriebsverfahren für eine Gasturbine anzugeben, welches auch den Wechsel zwischen einzelnen Fahrlinien der Gasturbinenregelung weitgehend kontrolliert und störungsfrei vornehmen lässt. In anderen Worten soll die Regelung auch in der Lage sein, bei Sprüngen zwischen zwei Fahrlinien, welche typischerweise ohne weitere Vorkehrungen nicht störungsfrei vorgenommen werden können, diese dennoch kontrolliert und stabil erfolgen zu lassen.

Diese der Erfindung zugrundeliegenden Aufgaben werden gelöst durch ein Betriebsverfahren für eine Gasturbine bei Teillastbetrieb gemäß Ansprüchen 1 und 2 sowie durch eine Gasturbinenregelung gemäß Anspruch 7, wie auch durch eine Gasturbine gemäß Anspruch 8.

Insbesondere werden die der Erfindung zugrundeliegenden Aufgaben gelöst durch ein Betriebsverfahren für eine Gasturbine bei Teillast, umfassend die folgenden Schritte:
- Vorgeben eines Leistungssollwerts bei einem vorbestimmten Temperaturwert;
- Bestimmen zweier Fahrlinien der Temperatur in Abhängigkeit von der Leistung der Gasturbine, wobei der Leistungssollwert zwischen diesen Fahrlinien angeordnet ist;
- Bestimmung des Leistungsunterschieds dieser beiden Fahrlinien bei dem im Wesentlichen konstanten, vorbestimmten Temperaturwert;
- Bestimmung einer Leistungsabweichung des vorgegebenen Leistungssollwerts von einer der beiden Fahrlinien bei dem im Wesentlichen konstanten, vorbestimmten Temperaturwert;
- Berechnen einer interpolierten Fahrlinienabweichung auf Grundlage des Leistungsunterschieds und der Leistungsabweichung,
   wobei die Temperatur (T) eine Turbinenaustrittstemperatur (ATK) oder eine rechnerisch bestimmte Turbineneintrittstemperatur ist.

Weiterhin werden die der Erfindung zugrundeliegenden Aufgaben gelöst durch ein Betriebsverfahren für eine Gasturbine bei Teillast, umfassend die folgenden Schritte:
- Vorgeben eines Sollwerts einer Temperatur bei einer vorbestimmten Leistung;
- Bestimmen zweier Fahrlinien der Temperatur in Abhängigkeit von der Leistung der Gasturbine, wobei der Sollwert der Temperatur zwischen diesen Fahrlinien (FL) angeordnet ist;
- Bestimmung des Unterschieds der Temperaturen dieser beiden Fahrlinien bei der im Wesentlichen konstanten, vorbestimmten Leistung;
- Bestimmung einer Abweichung des vorgegebenen Sollwerts der Temperatur von der Temperatur einer der beiden Fahrlinien bei der im Wesentlichen konstanten, vorbestimmten Leistung;
- Berechnen einer interpolierten Fahrlinienabweichung auf Grundlage des Unterschieds der Temperaturen und der Abweichung des Sollwerts der Temperatur,
   wobei die Temperatur (T) eine Turbinenaustrittstemperatur (ATK) oder eine rechnerisch bestimmte Turbineneintrittstemperatur ist.

Weiterhin werden die der Erfindung zugrundeliegenden Aufgaben gelöst durch eine Gasturbinenregelung, umfassend eine Kontrolleinheit, wobei die Kontrolleinheit dazu ausgebildet ist, ein Verfahren, wie oben wie auch nachfolgend dargestellt, auszuführen.

Ebenso werden die der Erfindung zugrundeliegenden Aufgaben gelöst durch eine Gasturbine umfassend eine solche Gasturbinenregelung.

Erfindungsgemäß ist eine Fahrlinie zunächst als eine Funktion der Temperatur von der Leistung zu verstehen, wobei jeder Fahrlinie ein fester Parametersatz zugeordnet ist. Alternativ kann eine Fahrlinie auch als eine Funktion der Leistung von einer Temperatur zu verstehen sein. Im Rahmen der weiteren Erklärungen soll jedoch nicht zwischen diesen beiden Fällen explizit unterschieden werden. Insbesondere, wenn die jeweiligen Funktionen eindeutig sind, ist eine Unterscheidung ohnehin nicht erforderlich.

Die Fahrlinien weisen also neben einer Temperatur, welche für den Leistungsbetrieb der Gasturbine relevant ist und zur Leistungsbestimmung der Gasturbine mit herangezogen werden kann, auch eine Leistung auf, welche während des Teillastbetriebes durch die Gasturbine abgegeben wird. Weiterhin weisen die Fahrlinien jedoch auch noch Betriebsparameter auf, welche insbesondere die Brennstoffverteilung betreffen, wobei die Parameter festlegen, wie viel Brennstoff anteilig den einzelnen Brennern der Gasturbine bzw. Brennerstufen zuzuführen ist. Typischerweise unterscheiden sich diese Parametersätze hinsichtlich der Brennstoffverteilung zweier unterschiedlicher Fahrlinien auch dahingehend, dass die relative Verteilung von Brennstoff an die einzelnen Brenner bzw. Brennerstufen variiert. Wird also zwischen zwei Fahrlinien durch die Gasturbinenregelung gewechselt, wird nicht nur der Betriebsparameter der Leistung bzw. Temperatur variiert sondern auch etwa die anteilige Brennstoffverteilung an die einzelnen Brenner und Brennerstufen. Zudem können sich die Fahrlinien auch durch variierende Verdichterleitschaufelstellungen unterscheiden.

Insbesondere die Brennstoffverteilung zwischen den einzelnen Brennern bzw. Brennerstufen gewährleistet bei Betrieb entlang einer Fahrlinie eine stabile Gesamtverbrennung. Soll nun jedoch zwischen den zwei Fahrlinien gewechselt werden, würden in der Gasturbinenregelung jeweils neue Parametersätze zur Anwendung kommen, so dass beim Wechsel zwischen zwei Fahrlinien auch der relative Anteil von Brennstoff zwischen den einzelnen Brennern bzw. Brennerstufen variieren würde.

Die vorliegende Erfindung schlägt nun vor, bei Wechsel zwischen zweier solcher Fahrlinien, einen geeigneten Leistungssollwert bzw. Sollwert einer Temperatur vorzugeben, der zwischen den beiden Fahrlinien angeordnet ist. Um nun einen stabilen Betrieb der Gasturbine gewährleisten zu können, werden zunächst der Leistungsunterschied bzw. der Unterschied der Temperaturen der beiden Fahrlinien bestimmt und gewissermaßen als maximaler Leistungsunterschied bzw. maximaler Unterschied der Temperaturen bereitgehalten. Ebenso wird von einer der Fahrlinien, typischerweise der zum aktuellen Betrieb der Gasturbine vorgesehenen Fahrlinie, der Abstand zu dem jeweiligen Leistungssollwert bzw. dem Sollwert der Temperatur bestimmt, und aus diesen Werten eine geeignete Leistungsabweichung bzw. Leistungsabweichung des vorgegebenen Sollwerts der Temperatur berechnet. Aufgrund der berechneten Leistungsunterschiede und Leistungsabweichungen bzw. aufgrund der Unterschiede der Temperaturen und der Abweichung des Sollwerts der Temperaturen kann nun ein Zwischenwert für den Leistungssollwert bzw. den Sollwert der Temperatur errechnet werden, den die Gasturbinenregelung zum Betrieb der Gasturbine berücksichtigen kann. Dieser Zwischenwert ergibt sich aus einer interpolierten Fahrlinienabweichung, aus welcher auch für die von den jeweiligen Fahrlinien umfassten einzelnen Parameter jeweils neue Zwischenparameterwerte berechnet werden.

Die Berechnung der interpolierten Fahrlinienabweichung dient also dazu, für die berechneten Zwischenwerte auch einen stabilen Betrieb der Gasturbine gewährleisten zu können. Da die erfindungsgemäße interpolierte Fahrlinienabweichung nun auch einen entsprechend interpolierten Parametersatz für die jeweiligen Betriebsparameter umfasst, kann also die Gasturbinenregelung auch bei Wechsel zwischen zwei Fahrlinien auf Zwischenzustände zugreifen, die vermeiden helfen, dass durch den raschen Wechsel zwischen den beiden Fahrlinien direkt ein instabiler Betriebszustand resultiert. Erfindungsgemäß wird also die Gasturbine anstelle eines Sprunges zwischen den zwei Fahrlinien wenigstens durch Einstellen eines weiteren Zwischenwertes zwischen den beiden Fahrlinien ausgeregelt. Damit kann verhindert werden, dass ungewünscht hohe Sprünge zwischen den einzelnen Betriebsparametern, die den Fahrlinien zugeordnet sind, erfolgen, und folglich kann eine unnötig starke Diskontinuität bei Betrieb der Gasturbine vermieden werden.

Die erfindungsgemäße Interpolation kann hierbei durch verschiedene mathematische Verfahren berechnet werden, wobei jedoch eine lineare Interpolation der einzelnen gleichartigen Parameter die einfachste und vorteilhafteste Lösung darstellt. In anderen Worten werden die einzelnen Betriebsparameter, welche etwa den zwei Fahrlinien bei einem vorbestimmten Temperaturwert bzw. bei einem vorbestimmten Leistungswert zugeordnet sind, insoweit interpoliert, dass die einzelnen Betriebsparameter durch einfache Berechnung in einer Dreisatzgleichung zur Berechnung eines Zwischenzustandes herangezogen werden.

Die Bestimmung der interpolierten Fahrlinienabweichung umfasst insbesondere auch eine Bestimmung der Brennstoffverteilung bei dem Leistungssollwert bzw. dem Sollwert der Temperatur. Diese unterscheidet sich typischerweise von der Brennstoffverteilung bei einer der beiden Fahrlinien, da beide Fahrlinien typischerweise unterschiedliche Brennstoffverteilungen aufweisen. Die interpolierte Fahrlinienabweichung ist also, vergleichbar etwa einer Fahrlinie, als Satz an Betriebsparametern zu verstehen, welcher etwa neben der relevanten Temperatur und der Leistung auch Betriebsparameter hinsichtlich der Brennstoffverteilung oder auch der Luftmenge (Stellung der Leitschaufeln eines Verdichtervorleitgitters) umfassen. Wird zudem noch Wasser in die Gasturbine zur Leistungssteigerung eingedüst, kann die interpolierte Fahrlinienabweichung ebenso wie die Fahrlinien auch zusätzlich noch Betriebsparameter aufweisen, die die Menge und Verteilung des eingedüsten Wassers näher bestimmen.

An dieser Stelle ist nochmals anzumerken, dass die erfindungsgemäß vorbestimmten Temperaturwerte hierbei solche Temperaturen betreffen, welche für den Betrieb der Gasturbine und deren Regelung als relevant herangezogen werden. Diese sind insbesondere gemessene wie auch berechnete Temperaturen, welche im Strömungskanal der Gasturbine während deren Betrieb auftreten. So sind etwa die Austrittstemperaturen an der Entspannungsturbine (ATK) oder auch die Turbineneintrittstemperatur (TT1) derartige Temperaturen. Diese Temperaturen können bspw. durch geeignete Berechnungsverfahren noch weiter genauer bestimmt werden, um etwa auch die Zuführung von Sekundärluft in oder nach dem Brennerraum berücksichtigen zu können. Die vorbestimmten Temperaturwerte sind also hinsichtlich der Leistungsbestimmung von Relevanz.

Die erfindungsgemäße Leistung betrifft die bei Betrieb der durch die Gasturbine abgegebene Leistung, welche auch als Last bezeichnet werden kann.

Um eine Gasturbine, welche bspw. entlang einer ersten Fahrlinie betrieben wird, auch im erfindungsgemäßen Sinn betreiben zu können, wird typischerweise die erfindungsgemäß berechnete interpolierte Fahrlinienabweichung einer der beiden Fahrlinien zugeschlagen, typischerweise der aktuell bei der Regelung der Gasturbine benutzten Fahrlinie, wodurch eine neue veränderte Fahrlinie resultiert. Wesentlich an dieser neuen geänderten Fahrlinie ist jedoch mindestens eine Zwischenzustand, welcher durch einen Leistungssollwert bzw. einen Sollwert der Temperatur beschrieben wird, wobei die betreffenden Sollwerte nicht von einer der beiden Fahrlinien, die bereits vorbeschrieben in der Regelung der Gasturbine hinterlegt sind, umfasst sind.

Gemäß der Erfindung ist vorgesehen, dass die Temperatur eine Turbinenaustrittstemperatur ist. Diese Turbinenaustrittstemperaturen können hierbei gemessene (typischerweise auch als TT2 bezeichnet) wie auch berechnete Turbinenaustrittstemperaturen sein. Insbesondere können diese auch rechnerisch um thermodynamische Effekte, wie etwa der Sekundärluftzufuhr oder -abfuhr, korrigierte Turbinenaustrittstemperaturen sein. Diese Temperaturen sind typischerweise im Rahmen der Regelung einer Gasturbine ohnehin vorhanden, so dass die Definition von Fahrlinien und der zu bestimmenden Zwischenzustände leicht erfolgen kann. Alternativ kann auch die rechnerisch bestimmte Turbineneintrittstemperatur zur Bestimmung der Temperatur herangezogen werden.

Gemäß einer weiteren, besonders bevorzugten Ausführungsform der Erfindung ist vorgesehen, dass eine der beiden Fahrlinien die aktuell bei der Regelung der Gasturbine genutzte Fahrlinie ist. Eine Nutzung liegt hierbei dann vor, wenn die betreffende Fahrlinie, die als Regelungsgrundlage bei der Gasturbine benutzten Parameter zur Verfügung stellt.

Entsprechend einer besonders bevorzugten Ausführungsform der Erfindung ist vorgesehen, dass die interpolierte Fahrlinienabweichung durch eine lineare Interpolation berechnet wird. Alternative Ansätze wären entweder eine gewichtete Interpolation oder eine Interpolation durch Polygonenzüge, welche nach entsprechenden Kriterien erstellt werden kann. Die lineare Interpolation hingegen lässt sich leicht rechnerisch als einfacher Abweichungswert bestimmen, welcher etwa in einer Dreisatzgleichung berechnet werden kann. Dieser so berechnete Unterschied, welcher auch als Delta-Unterschied bezeichnet werden kann, kann für den weiteren Betrieb der Gasturbine dann der aktuell genutzten Fahrlinie zugeschlagen werden, so dass ein neuer Betriebsführungswert bestimmt werden kann.

Gemäß einer weiteren besonders bevorzugten Ausführungsform der Erfindung ist vorgesehen, dass die interpolierte Fahrlinienabweichung eine Änderung der Verdichterleitschaufelstellung berücksichtigt, bzw. mit umfasst. Eine Änderung der Verdichterleitschaufelstellung kann hierbei bereits in der Berechnung des Leistungsunterschieds der beiden Fahrlinien oder der Bestimmung des Unterschiedes der Temperaturen der beiden Fahrlinien mit berücksichtigt sein. In anderen Worten können damit auch Fahrlinien berücksichtigt sein, die in ihren Betriebsparametern auch verschiedene, die Stellung der Verdichterleitschaufeln charakterisierenden Werte umfassen. Insofern kann auch flexibel zwischen Fahrlinien gewechselt werden, die unterschiedliche Stellungen der Verdichterleitschaufeln vorgeben.

Gemäß einer weiteren besonders bevorzugten Ausführungsform der Erfindung ist vorgesehen, dass weiterhin der folgende Schritt mit umfasst ist:
- Bestimmen eines Satzes an Einzelbrennstoffmengen, welche einer Mehrzahl an Brennern bzw. Brennerstufen der Gasturbine zugeführt werden, unter Berücksichtigung der interpolierten Fahrlinienabweichung (IFA).

Der Satz an Einzelbrennstoffmengen kann sich hierbei auf eine Mehrzahl an Brenner bzw. auch auf eine Mehrzahl an Brennerstufen beziehen. In anderen Worten wird bei der Berechnung der interpolierten Fahrlinienabweichung auch die Verteilung der Einzelbrennstoffmengen der Mehrzahl an Brennern neu bestimmt. Insofern kann die interpolierte Fahrlinienabweichung auch zur Bestimmung eines Korrekturwertes zu einer aktuell eingestellten Brennstoffmenge für eine vorbestimmte Anzahl an Brennern bzw. Brennerstufen dienen. Um nun die Gasturbine entsprechend dieser Ausführungsform zu betreiben, würde die interpolierte Fahrlinienabweichung, also der Korrekturwert etwa einer aktuell genutzten Fahrlinie zugeschlagen, wodurch durch die geeignete mathematische Verknüpfung der aktuellen Fahrlinie mit der interpolierten Fahrlinienabweichung, etwa durch Addition, der tatsächlich einzustellende Einzelbrennstoffstrom für die Mehrzahl an Brennern bzw. Brennerstufen berechnet werden kann.

Nachfolgend soll die Erfindung anhand einzelner Figuren im Detail näher beschrieben werden. Hierbei ist die Erfindung lediglich schematisch dargestellt, wodurch jedoch keine Einschränkung der Ausführbarkeit der Erfindung resultiert.

Weiterhin ist darauf hinzuweisen, dass alle nachfolgenden technischen Merkmale, welche mit gleichen Bezugszeichen versehen sind, gleiche technische Wirkung aufweisen.

Ebenso ist darauf hinzuweisen, dass jede beliebige Kombination der nachfolgend beschriebenen technischen Merkmale beansprucht wird, soweit diese Kombination die der Erfindung zugrundeliegende Aufgabe lösen kann.

Hierbei zeigen:
- Figur 1: eine schematische Darstellung in Diagrammform des Verlaufs unterschiedlicher Fahrlinien zum Betrieb einer Gasturbine, sowie der Bestimmung eines Leistungssollwerts gemäß einer ersten Ausführungsform der Erfindung;
- Figur 2: eine weitere schematische Darstellung in Diagrammform unterschiedlicher Fahrlinien zum Betrieb einer Gasturbine, unter Berücksichtigung eines Sollwerts einer Temperatur, gemäß einer weiteren Ausführungsform der Erfindung;
- Figur 3: eine weitere schematische Darstellung in Diagrammform eines Verlaufs unterschiedlicher Fahrlinien zur Bestimmung eines Leistungssollwerts bzw. Sollwerts einer Temperatur gemäß einer weiteren Ausführungsform der Erfindung.

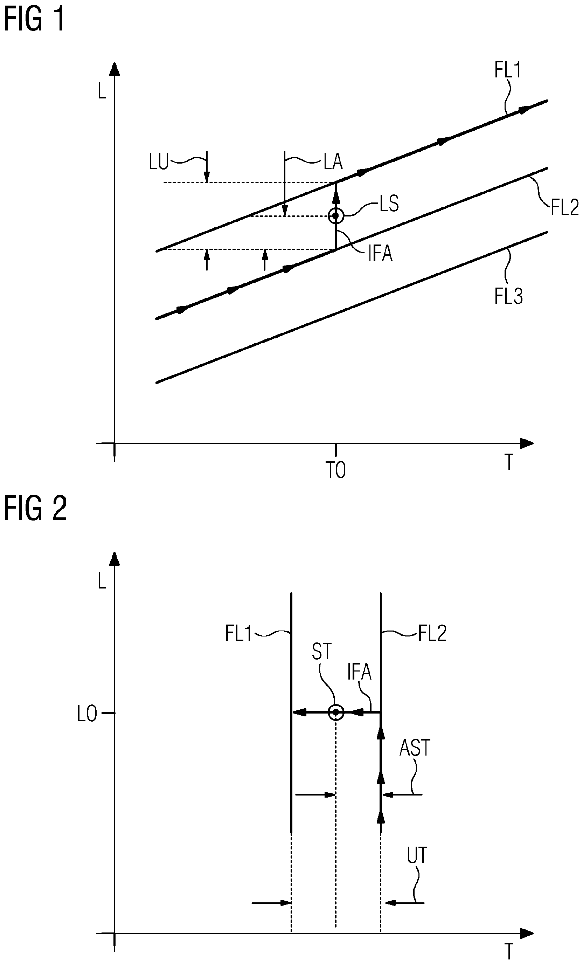

Figur 1 zeigt eine schematische Ansicht in Diagrammform einer Anzahl an Fahrlinien FL1, FL2, FL3 zum Betrieb einer Gasturbine, welche weitgehend parallel zueinander verlaufen. Die Fahrlinien FL1, FL2, FL3 können als Funktion der Temperatur T in Abhängigkeit der Leistung L der Gasturbine 1 (vorliegend nicht gezeigt) bzw. auch als Funktion der Leistung L in Abhängigkeit der Temperatur T beschrieben werden. Die gezeigten Fahrlinien FL1, FL2, FL3 weisen hierbei bei zunehmender Temperatur T einen gleichmäßigen Anstieg der Leistung L auf. Typischerweise zeichnet sich ein derartiger Fahrlinienverlauf etwa durch vermehrte Zugabe an Brennstoff an die einzelnen Brenner bzw. Brennerstufen der Gasturbine 1 aus. In anderen Worten können die Fahrlinien FL1, FL2 und FL3 leicht beschrieben werden, indem etwa bei bereits bestehender und fester Verteilung der einzelnen anteiligen Brennstoffmengen für die Brenner bzw. Brennerstufen der Gasturbine 1 lediglich die Gesamtmenge an Brennstoff erhöht wird.

Die einzelnen Fahrlinien FL1, FL2, FL3 können sich jedoch dahingehend unterscheiden, dass die anteiligen Mengen an Einzelbrennstoffströmen, welche den einzelnen Brennern bzw. Brennerstufen der Gasturbine zugeführt werden, unterscheiden. Soll also bspw. ein Betriebswechsel zwischen einem Betrieb, welcher die Fahrlinie FL2 als Führungsgröße benutzt, dahingehend erfolgen, dass nun die Fahrlinie FL1 als Führungsgröße herangezogen werden soll, müsste in der Regelung der Gasturbine 1 ein entsprechender Wechsel des jeweilig zugehörigen Parametersatzes vorgenommen werden. Da die Fahrlinien FL1 und FL2 sich auch hinsichtlich der anteiligen Mengen an Brennstoff zu den einzelnen Brennern bzw. Brennerstufen unterscheiden, würde dies einen mitunter verhältnismäßig starken Sprung bei der Verteilungsänderung des Brennstoffes herbeiführen, welcher die Gasturbine in einen instabilen Betriebszustand überführen kann. Um dies zu verhindern, soll nun ein Leistungssollwert LS bestimmt werden, welcher zwischen den beiden Fahrlinien FL1 und FL2 angeordnet ist. Um diesen Leistungssollwert LS näher zu bestimmen, wird nach einer Ausführungsform der Erfindung eine Interpolation vorgenommen, die die entsprechenden Betriebsparameter für den Leistungssollwert LS berechnet. Hierzu wird bei einer vorbestimmten Temperatur T0, welche sich während dieses Verfahrens nicht ändern soll, bzw. nicht wesentlich ändern soll, ein Leistungsunterscheid LU bestimmt werden, welcher zwischen den beiden Fahrlinien FL2 und FL1 bei im Wesentlichen konstantem vorbestimmtem Temperaturwert T0 vorliegt. Gleichermaßen wird eine Leistungsabweichung LA des vorgegebenen Leistungssollwertes LS von der zweiten Fahrlinien FL2 ebenfalls bei im Wesentlichen kontantem vorgegebenem Temperaturwert T0 bestimmt. Mit Hilfe dieser beiden Werte des Leitungsunterschiedes LU und der Leitungsabweichung LA kann nun über eine einfache Dreisatzrechnung eine interpolierte Fahrlinienabweichung IFA bestimmt werden, die gewissermaßen alle Betriebsparameter für eine Fahrlinie FL umfasst, jedoch auf eine Zwischenposition zwischen den beiden Fahrlinien FL1 und FL2 verweist. Wird diese interpolierte Fahrlinienabweichung IFA nun etwa noch der zweiten Fahrlinie FL2 rechnerisch zugeschlagen, kann ein neuer Fahrlinienverlauf definiert werden, welcher etwa die Fahrlinie 2 mit der Fahrlinie 1 verbindet (siehe die hervorgehobenen Bereiche der jeweiligen Fahrlinien).

Durch die Bestimmung eines solchen Leistungssollwertes LS kann also bei Wechsel zwischen den Fahrlinien FL2 und FL1 ein Zwischenzustand angefahren werden, der einen verhältnismäßig stabileren Zwischenbetrieb bei Änderung des geregelten Betriebes vorzunehmen erlaubt. Natürlich ist es auch denkbar, dass eine größere Anzahl, eine Mehrzahl an unterschiedlichen Leistungssollwerten zwischen den jeweiligen Fahrlinien FL1 und FL2 bestimmt werden. Dementsprechend kann damit gerechnet werden, dass der so eingestellte Gasturbinenbetrieb sogar noch stabiler erfolgen kann. In anderen Worten kann durch die Berechnung einer oder mehrerer Leistungssollwerte zwischen den Fahrlinien FL1 und FL2 eine neue Gesamtfahrlinie definiert werden, die als geeignete Führungsgröße im Rahmen der Gasturbinenregelung herangezogen werden kann. Hierbei ist es auch denkbar, dass die so berechneten Zwischenzustände nicht nur unterschiedlich hinsichtlich der Parameter der anteiligen einzelnen Brennstoffmengenströme sind, sondern auch etwa unterschiedlich hinsichtlich der Leitschaufelstellungen. Gerade auch der in Figur 1 gezeigte Übergang zwischen der Fahrlinie FL2 und FL1, welcher ja bei im Wesentlichen konstanter vorgegebener Temperatur T0 erfolgt, also bei im Wesentlichen unverändertem Brennstoffmassenstrom, wird typischerweise durch eine Veränderung der Verdichtervorleitschaufelstellungen neben einer Änderung der anteiligen Brennstoffströme zu den einzelnen Brennern bzw. Brennerstufen vorgenommen.

Anders verhält sich dies bei einem Wechsel des Gasturbinenbetriebs zwischen einer Fahrlinie FL2 und einer Fahrlinie FL1, wie in Figur 2 dargestellt. Sind die Fahrlinien FL1 und FL2 im Wesentlichen bei unveränderlichen Temperaturwerten vorgegeben, wobei sich lediglich die zugehörigen Leistungswerte ändern, kann durch eine Verstellung der Verdichtervorleitschaufeln praktisch kein Wechsel zwischen den beiden Fahrlinien FL1 und FL2 erfolgen. Da im Wesentlichen der Gesamtbrennstoffmassenstrom verantwortlich ist für die Erzeugung der relevanten Temperaturen (bspw. Turbinenaustrittstemperaturen), erfordert der vorliegend gezeigte Wechsel zwischen der Fahrlinie FL2 und der Fahrlinie FL1 die Vorgabe eines Sollwertes ST einer Temperatur T, welcher zwischen den beiden Fahrlinien FL2 und FL1 angeordnet ist. Zur Berechnung der interpolierten Fahrlinienabweichung IFA werden wiederum ein Unterschied, dieses Mal jedoch zwischen den Temperaturen der beiden Fahrlinien bei der im Wesentlichen konstanten vorbestimmten Leistung L0 berechnet. Zudem wird eine Abweichung AST des vorgegebenen Sollwerts ST der Temperatur T von der Temperatur T der Fahrlinie FL2 bei einer im Wesentlichen konstanten vorbestimmten Leistung L0 berechnet. Wiederum durch eine Dreisatzgleichung kann aus diesen beiden Werten der Abweichung AST des vorgegebenen Sollwerts ST der Temperatur T sowie des Unterschieds UT der Temperatur T die interpolierte Fahrlinienabweichung IFA berechnet werden.

Die weiteren Grundsätze bei der Bestimmung des Sollwertes ST einer Temperatur T entsprechen hierbei den Grundsätzen wie unter Figur 1 zur Bestimmung des Leistungssollwertes LS. Der Übergang zwischen den beiden Fahrlinien FL2 und FL1 hingegen wird in erster Linie durch eine Änderung des Gesamtbrennstoffmassenstroms herbeigeführt, welcher den einzelnen Brennern bzw. Brennerstufen der Gasturbine 1 (vorliegend nicht gezeigt) zugeführt wird.

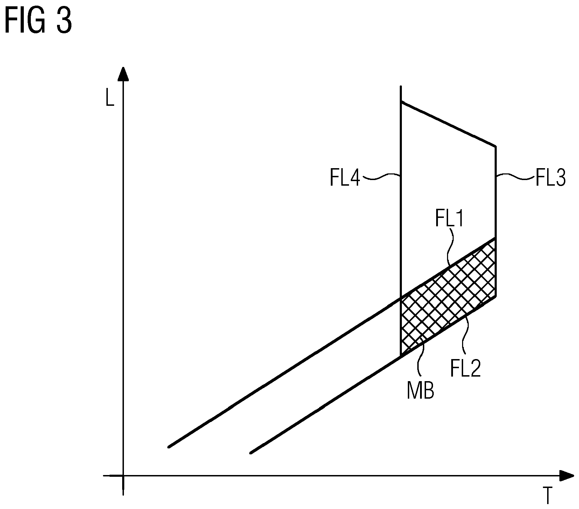

Figur 3 zeigt eine weitere diagrammatische Darstellung unterschiedlicher Fahrlinien FL1, FL2, FL3 und FL4, wobei die in den Figuren 1 und 2 dargestellten Fälle nun kombiniert sind. Durch die Kombination der Fälle ergibt sich ein Mischbereich MB im Bereich des Überganges zwischen den Fahrlinien FL1, FL2 und FL3, FL4, welcher kariert dargestellt ist. Während der in Figur 1 gezeigte Übergang von der Fahrlinie FL2 zur Fahrlinie FL1 über den Leistungssollwert LS im Wesentlichen durch eine Verstellung der Verdichtervorleitschaufeln erreicht werden kann und der Übergang zwischen der Fahrlinie FL2 und FL1 nach Figur 2 im Wesentlichen durch eine Änderung des Gesamtbrennstoffmassenstroms erreicht werden kann, wobei der Sollwert ST der Temperatur T berücksichtigt wird, kann in dem Mischbereich MB nun eine Kombination von Verstellung von Gesamtbrennstoffmassenstrom und Verdichtervorleitschaufelstellung erfolgen, um zwischen den einzelnen Fahrlinien beliebig zu wechseln. Die Verstellung von Gesamtbrennstoffmassenstrom und Verdichtervorleitschaufelstellung kann hierbei im Wesentlichen gleichzeitig erfolgen.

Weitere Ausführungsformen ergeben sich aus den Unteransprüchen.

## Patentansprüche

1. Betriebsverfahren für eine Gasturbine (1) bei Teillastbetrieb, umfassend die folgenden Schritte:
- Vorgeben eines Leistungssollwerts (LS) bei einem vorbestimmten Temperaturwert (T0);
- Bestimmen zweier Fahrlinien (FL) der Temperatur (T) in Abhängigkeit von der Leistung (L) der Gasturbine (1), wobei der Leistungssollwert (LS) zwischen diesen Fahrlinien (FL) angeordnet ist;
- Bestimmung des Leistungsunterschieds (LU) dieser beiden Fahrlinien (FL) bei dem im Wesentlichen konstanten, vorbestimmten Temperaturwert (T0);
- Bestimmung einer Leistungsabweichung (LA) des vorgegebenen Leistungssollwerts (LS) von einer der beiden Fahrlinien (FL) bei dem in Wesentlichen konstanten, vorbestimmten Temperaturwert (T0);
- Berechnen einer interpolierten Fahrlinienabweichung (IFA) auf Grundlage des Leistungsunterschieds (LU) und der Leistungsabweichung (LA),
wobei die Temperatur (T) eine Turbinenaustrittstemperatur (ATK) oder eine rechnerisch bestimmte Turbineneintrittstemperatur ist.

2. Betriebsverfahren für eine Gasturbine (1) bei Teillastbetrieb, umfassend die folgenden Schritte:
- Vorgeben eines Sollwerts (ST) einer Temperatur (T) bei einer vorbestimmten Leistung (L0);
- Bestimmen zweier Fahrlinien (FL) der Temperatur (T) in Abhängigkeit von der Leistung (L) der Gasturbine (1), wobei der Sollwert (ST) der Temperatur (T) zwischen diesen Fahrlinien (FL) angeordnet ist;
- Bestimmung des Unterschieds (UT) der Temperaturen (T) dieser beiden Fahrlinien (FL) bei der im Wesentlichen konstanten, vorbestimmten Leistung (L0);
- Bestimmung einer Abweichung (AST) des vorgegebenen Sollwerts (ST) der Temperatur (T) von der Temperatur (T) einer der beiden Fahrlinien (FL) bei der im Wesentlichen konstanten, vorbestimmten Leistung (L0);
- Berechnen einer interpolierten Fahrlinienabweichung (IFA) auf Grundlage des Unterschieds (UT) der Temperaturen (T) und der Abweichung (AST) des Sollwerts (ST) der Temperatur (T),
wobei die Temperatur (T) eine Turbinenaustrittstemperatur (ATK) oder eine rechnerisch bestimmte Turbineneintrittstemperatur ist;

3. Betriebsverfahren nach einem der vorhergehenden Ansprüche,
**dadurch gekennzeichnet, dass**
eine der beiden Fahrlinien (FL) die aktuell bei der Regelung der Gasturbine (1) genutzte Fahrlinie ist.

4. Betriebsverfahren nach einem der vorhergehenden Ansprüche,
**dadurch gekennzeichnet, dass**
die interpolierte Fahrlinienabweichung (IFA) durch eine lineare Interpolation berechnet wird.

5. Betriebsverfahren nach einem der vorhergehenden Ansprüche,
**dadurch gekennzeichnet, dass**
die interpolierte Fahrlinienabweichung (IFA) eine Änderung der Verdichterleitschaufelstellung berücksichtigt, bzw. mit umfasst.

6. Betriebsverfahren nach einem der vorhergehenden Ansprüche,
**dadurch gekennzeichnet, dass**
weiterhin der folgende Schritt umfasst ist:
- Bestimmen eines Satzes an Einzelbrennstoffmengen, welche einer Mehrzahl an Brennern bzw. Brennerstufen der Gasturbine zugeführt werden, unter Berücksichtigung der interpolierten Fahrlinienabweichung (IFA).

7. Gasturbinenregelung, umfassend eine Kontrolleinheit, wobei die Kontrolleinheit dazu ausgebildet ist, ein Verfahren nach einem der vorhergehenden Ansprüche auszuführen.

8. Gasturbine umfassend eine Gasturbinenregelung nach Anspruch 7.

## Claims

1. Operating method for a gas turbine (1) during partial load operation, comprising the following steps:
- specifying a power output setpoint value (LS) at a predetermined temperature value (T0);
- determining two operating curves (FL) of the temperature (T) as a function of the power output (L) of the gas turbine (1), wherein the power output setpoint value (LS) is arranged between these operating curves (FL);
- determining the power output difference (LU) of these two operating curves (FL) at the essentially constant, predetermined temperature value (T0);
- determining a power output deviation (LA) of the predetermined power output setpoint value (LS) from one of the two operating curves (FL) at the essentially constant, predetermined temperature value (T0);
- calculating an interpolated operating curve deviation (IFA) on the basis of the power output difference (LU) and the power output deviation (LA),
wherein the temperature (T) is a turbine exit temperature (ATK) or a computationally determined turbine inlet temperature.

2. Operating method for a gas turbine (1) during partial load operation, comprising the following steps:
- specifying a setpoint value (ST) of a temperature (T) at a predetermined power output (L0);
- determining two operating curves (FL) of the temperature (T) as a function of the power output (L) of the gas turbine (1), wherein the setpoint value (ST) of the temperature (T) is arranged between these operating curves (FL);
- determining the difference (UT) of the temperatures (T) of these two operating curves (FL) at the essentially constant, predetermined power output (L0);
- determining a deviation (AST) of the predetermined setpoint value (ST) of the temperature (T) from the temperature (T) of one of the two operating curves (FL) at the essentially constant, predetermined power output (L0);
- calculating an interpolated operating curve deviation (IFA) on the basis of the difference (UT) of the temperatures (T) and the deviation (AST) of the setpoint value (ST) of the temperature (T),
wherein the temperature (T) is a turbine exit temperature (ATK) of a computationally determined turbine inlet temperature.

3. Operating method according to either of the preceding claims,
**characterized in that**
one of the two operating curves (FL) is the operating curve currently in use in the control system of the gas turbine (1).

4. Operating method according to one of the preceding claims,
**characterized in that**
the interpolated operating curve deviation (IFA) is calculated by means of a linear interpolation.

5. Operating method according to one of the preceding claims,
**characterized in that**
the interpolated operating curve deviation (IFA) takes into consideration, or also includes, a change of the compressor guide vane position.

6. Operating method according to one of the preceding claims,
**characterized in that**
the following step is also included:
- determining a set of individual fuel quantities which are fed to a multiplicity of burners or burner stages of the gas turbine, taking into consideration the interpolated operating curve deviation (IFA).

7. Gas turbine control system, comprising a control unit, wherein the control unit is designed to implement a method according to one of the preceding claims.

8. Gas turbine comprising a gas turbine control system according to Claim 7.

## Revendications

1. Procédé pour faire fonctionner une turbine (1) à gaz en fonctionnement en charge partielle, comprenant les stades suivants :
- on prescrit une valeur (LS) de consigne de puissance à une valeur (T0) de température déterminée à l'avance ;
- on détermine deux lignes (FL) de variation de la température (T) en fonction de la puissance (L) de la turbine (1) à gaz, la valeur (LS) de consigne de la puissance étant entre ces lignes (FL) de variation ;
- on détermine la différence (LU) de puissance entre ces deux lignes (FL) de variation à la valeur (T0) de température sensiblement constante déterminée à l'avance ;
- on détermine un écart (LA) de puissance de la valeur (LS) de consigne de la puissance donnée à l'avance à l'une des deux lignes (FL) de variation à la valeur (T0) de température sensiblement constante déterminée à l'avance,
- on calcule un écart (IFA) interpolé de ligne de variation sur la base de la différence (LU) de puissance et de l'écart (LA) de puissance,
dans lequel la température (T) est une température (ATK) de sortie de la turbine ou une température de sortie de la turbine déterminée par le calcul.

2. Procédé pour faire fonctionner une turbine (1) à gaz en fonctionnement en charge partielle, comprenant les stades suivants :
- on prescrit une valeur (ST) de consigne d'une température (T) à une puissance (L0) déterminée à l'avance ;
- on détermine deux lignes (FL) de variation de la température (T) en fonction de la puissance (L) de la turbine (1) à gaz, la valeur (ST) de consigne de la température (T) étant entre ces lignes (FL) de variation ;
- on détermine la différence (UT) des températures (T) de ces deux lignes (FL) de variation à la puissance (L0) sensiblement constante déterminée à l'avance ;
- on détermine un écart (AST) de la valeur (ST) de consigne donnée à l'avance de la température à la température (T) de l'une des deux lignes (FL) de variation à la puissance (L0) sensiblement constante déterminée à l'avance ;
- on détermine un écart (AST) de la valeur (ST) de consigne de la température (T) à la température (T) de l'une des deux lignes (FL) de variation à la puissance (L0) sensiblement constante déterminée à l'avance ;
- on calcule un écart (IFA) interpolé de ligne de variation sur la base de la différence (UT) des températures (T) et de l'écart (AST) de la valeur (ST) de consigne de la température (T),

3. Procédé suivant l'une des revendications précédentes,
**caractérisé en ce que**
l'une des deux lignes (FL) de variation est la ligne de variation en cours d'utilisation dans la régulation de la turbine (1) à gaz.

4. Procédé suivant l'une des revendications précédentes,
**caractérisé en ce que**
l'on calcule l'écart (IFA) interpolé de ligne de variation par une interpolation linéaire.

5. Procédé suivant l'une des revendications précédentes,
**caractérisé en ce que**
l'écart (IFA) interpolé de ligne de variation prend en compte une variation de la position d'une aube directrice de compresseur ou l'incorpore.

6. Procédé suivant l'une des revendications précédentes,
**caractérisé en ce qu'**
il comprend, en outre, le stade suivant :
- détermination d'un jeu de quantités individuelles de combustible, qui sont envoyées à une pluralité de brûleurs ou d'étages de brûleur de la turbine à gaz en tenant compte de l'écart (IFA) interpolé de ligne de variation.

7. Régulation de turbine à gaz, comprenant une unité de contrôle, l'unité de contrôle état constituée pour effectuer un procédé suivant l'une des revendications précédentes.

8. Turbine à gaz comprenant une régulation de turbine à gaz suivant la revendication 7.
